(19) Europäisches Patentamt
European Patent Office
Office européen des brevets

(11) EP 4 342 954 A1

(12) EUROPEAN PATENT APPLICATION

(43) Date of publication:
27.03.2024 Bulletin 2024/13

(21) Application number: 23199519.2

(22) Date of filing: 25.09.2023

(51) International Patent Classification (IPC):
*C09D 11/30* (2014.01) *C09D 11/322* (2014.01)
*C09D 11/326* (2014.01)

(52) Cooperative Patent Classification (CPC):
**C09D 11/30; C09D 11/322; C09D 11/326**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 26.09.2022 US 202263410160 P

(71) Applicants:
- **DuPont Electronics, Inc.**
**Wilmington, DE 19805 (US)**
- **Rohm and Haas Electronic Materials CMP Holdings, Inc.**
**Newark, DE 19713 (US)**

(72) Inventors:
- **LI, Xiaoqing**
**WILMINGTON (US)**
- **CHI, Changzai**
**NEWARK (US)**
- **HUH, Ji Yeon**
**WILMINGTON (US)**

(74) Representative: **Dehns**
**St. Bride's House**
**10 Salisbury Square**
**London EC4Y 8JD (GB)**

# (54) AQUEOUS INKJET INKS CONTAINING SILANIZED SILICA PARTICLES

(57) The present disclosure pertains an aqueous inkjet ink having self-dispersing pigment or pigment dispersed by polyurethane or acrylic dispersant polymer with alkaline neutralized carboxyl functional group, polyurethane or acrylic binder particles, and less than 3 wt% of surface modified silanized colloid silica particles with particle size smaller than 30 nm as an additive.

EP 4 342 954 A1

## Description

BACKGROUND OF THE DISCLOSURE

The present disclosure pertains to an aqueous inkjet ink comprising an aqueous vehicle, a dispersed pigment, a polymeric binder, and surface modified silanized colloidal silica particles with particle size smaller than 30 nm as an additive.

Inkjet printing is a non-impact digital printing process in which droplets of ink are deposited on a substrate, such as paper, to form the desired image. Inkjet printers are equipped with an ink set which, for full color printing, typically comprises a cyan ink, a magenta ink, a yellow ink, and an additional black ink (CMYK) with the black ink being the most common ink. For transparent substrate such as clear plastics, a white ink is commonly needed for enhancing color images. In this case, an ink set typically comprises CMYKW inks.

Inkjet printing is becoming increasingly important for markets other than conventional desktop printing for small office/home office. Digital printing methods have gained popularity in commercial and packaging printing given inkjet printing enables cost effective short production by eliminating the setup expense associated with various analog printing processes such as screen, flexo, gravure and offset printing. The advancement of single pass printer architecture with printheads having higher nozzle counts, tighter packing densities and smaller drop sizes further accelerates analog-to-digital transformation. These developments have made printhead constructed by silicon (Si) MEMS more popular, since such printhead is compatible with the precise feature size control inherent in the photolithographic and micromachining techniques using MEMS processes. However, printer OEMs also increasingly encounter silicon constructed printhead's compatibility issue with aqueous inkjet inks, specifically non-wet coating of the printhead is often found to be stripped away after immersing in the aqueous inks for a period time, and the life of the printhead is greatly limited as the result. A hypothesis is that aqueous ink diffuses through the pin holes and edges of the non-wet coating layer, reacts with the Si-O bond underneath the coating, and breaks the bonding between the coating and silicon layer. It is also found that high pH, sodium, and potassium cations with high PKa are especially harmful.

Expansion of inkjet in commercial and packaging printing applications has also broadened the printing media from plain paper and special inkjet paper to low absorption substrate such as coated papers, coated corrugated board, folding carton, and non-absorption plastic substrate such as vinyl, polystyrene and polypropylene boards, and flexible polypropylene, polyester, nylon and polyethylene films. Compared with plain paper and special inkjet paper, an ink's little or no penetration on low and non-absorption substrates leads to slow drying, poor image quality, and prints' sticking together before use. These defects worsen especially when printing conducted at high speed.

To address silicon printhead compatibility issue, various ink formulation strategies have been tried in the past. For example, U.S. Patent No. 7370952 disclosed an ink comprising a buffer to control pH to lessen the reactivity of the ink with silicon. U.S. Patent No. 8465142 disclosed an inkjet ink printing fluid containing a soluble metal ligand complex comprising a divalent or a trivalent metal and one or more organic ligands. WO2010138191 disclosed an ink composition comprising at least a first colorant and a soluble organic aromatic azo compound at a concentration enough to inhibit corrosion of the silicon-based material when contacted by the ink composition. However, the above approaches were not sufficient to prevent printhead corrosion especially when it was exposed to inks at temperatures higher than 30 °C.

Another type of approach involved addition of inorganic particle, e.g., U.S. Patent No. 5925178 disclosed a pigment inkjet inks containing aluminum stabilized colloidal silica particles with particle size varying from 5 nm to 50 nm. However, this type of colloidal silica additive often leads to ink with poor stability upon long term storage. In an aqueous solution, the surface of native silica particle is covered with silanol groups and the isoelectric point of unmodified silica is at pH 2. To make the silica particles compatible with aqueous inkjet ink with a pH typically ranging from 8 to 9, the silica particles are neutralized with alkaline cations, such as $Na^+$, $K^+$, $Li^+$, and $NH_4^+$, and stabilized by the charge repulsion between particles. These highly charged silica particles, as a form of electrolyte, can increase an ink's conductivity to a level high enough to cause aggregation of pigment and resin particles in the ink. Therefore, the maximum loading of alkaline stabilized silica is limited, and may not be sufficient to prevent printhead corrosion.

A need still exists for aqueous inkjet inks that are compatible with printhead constructed with silicon, especially for printing at temperatures higher than 30 °C, while possessing good ink stability. The present disclosure satisfies this need by providing ink compositions having surface modified silanized colloidal silica particles with particle size smaller than 30 nm as an additive.

SUMMARY OF THE DISCLOSURE

An embodiment provides an aqueous inkjet ink comprising an aqueous vehicle, a pigment dispersion, a polymeric binder, and an additive; wherein said pigment dispersion comprising a self-dispersing pigment or a pigment dispersed by a polyurethane dispersant polymer or an acrylic dispersant polymer with alkaline neutralized carboxyl functional group, said polymeric binder is a polyurethane polymer or an acrylic polymer, and said additive comprising a

surface modified silanized colloidal silica particle, and is present at less than 3 wt%, based on the total weight of the ink, and wherein the average particle size of said silica particle is smaller than 30 nm.

Another embodiment provides that the surface modified silanized colloidal silica particles are prepared by reacting colloidal silica particles with an epoxy silane.

Another embodiment provides that the pigment dispersion comprising a pigment dispersed by a polyurethane dispersant polymer with alkaline neutralized carboxyl functional group.

Another embodiment provides that the pigment dispersion comprising a pigment dispersed by an acrylic dispersant polymer with alkaline neutralized carboxyl functional group.

Another embodiment provides that the polymeric binder is a polyurethane polymer.

Another embodiment provides that the polymeric binder is an acrylic polymer.

Another embodiment provides that the ink does not comprise any free, surface unmodified, colloidal silica particles.

Another embodiment provides that the polyurethane dispersant polymer and acrylic dispersant polymer are different from the polymeric binder.

Another embodiment provides that the silanized colloidal silica particle has the structure of Formula (I):

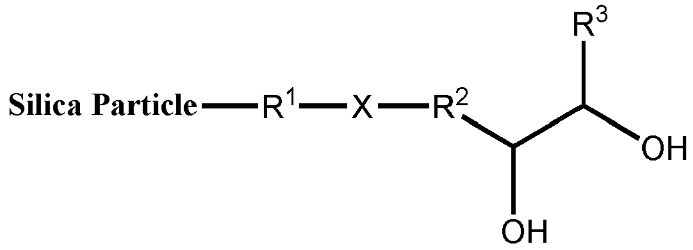

(I) ;

wherein X is O or a straight bond; $R^1$ and $R^2$ are independently linear or branched $C_1$-$C_5$ alkylene; and $R^3$ is H, $C_1$-$C_5$ alkyl or $C_1$-$C_5$ alkyl substituted by $C_1$-$C_3$ alkyl.

Another embodiment provides that X is O.

Another embodiment provides that $R^1$ is $-(CH_2)_3-$.

Another embodiment provides that $R^2$ is $-(CH_2)-$.

Another embodiment provides that $R^3$ is H.

Yet another embodiment provides that X is a straight bond.

These and other features and advantages of the present embodiments will be more readily understood by those of ordinary skill in the art from a reading of the following detailed description. Certain features of the disclosed embodiments which are, for clarity, described above and below as separate embodiments, may also be provided in combination in a single embodiment. Conversely, various features of the disclosed embodiments that are described in the context of a single embodiment, may also be provided separately or in any subcombination.

## DETAILED DESCRIPTION

Unless otherwise stated or defined, all technical and scientific terms used herein have commonly understood meanings by one of ordinary skill in the art to which this disclosure pertains.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

When the term "about" is used in describing a value or an end-point of a range, the disclosure should be understood to include the specific value or end-point referred to.

As used herein, the term "dispersion" means a two-phase system wherein one phase consists of finely divided particles (often in a colloidal size range) distributed throughout a bulk substance, the particles being the dispersed or internal phase and the bulk substance being the continuous or external phase.

As used herein, the term "dispersant" means a surface active agent added to a suspending medium to promote uniform and maximum separation of extremely fine solid particles often of colloidal sizes. For pigments, the dispersants are most often polymeric dispersants, and the dispersants and pigments are usually combined using a dispersing

equipment.

As used herein, the term "aqueous vehicle" refers to water or a mixture of water and at least one water-soluble, or partially water-soluble (i.e., methyl ethyl ketone), organic solvent (co-solvent).

As used herein, the term "substantially" means being of considerable degree, almost all.

As used herein, the term "dyne/cm" means dyne per centimetre, a surface tension unit.

As used herein, the term "cP" means centipoise, a viscosity unit.

The materials, methods, and examples herein are illustrative only except as explicitly stated, and are not intended to be limiting.

In addition, references in the singular may also include the plural (for example, "a" and "an" may refer to one, or one or more) unless the context specifically states otherwise. Ink Sets

The term "ink set" refers to all the individual inks or other fluids an inkjet printer is equipped to jet. The white inks used to print the image after printing the colored inks or the white ink used to print prior to printing the colored inks are considered part of the ink set.

In one preferred embodiment, the ink set comprises at least two differently colored inkjet inks, at least one of which is a white pigmented inkjet ink as described above.

In another preferred embodiment, the ink set comprises at least four differently colored inkjet inks, wherein at least one is a cyan inkjet ink, at least one is a magenta inkjet ink, at least one is a yellow inkjet ink, and at least one is a white inkjet ink.

In addition to the colored inkjet inks just mentioned, it is also preferable to include a black inkjet ink in the ink set.

In addition to the CMYKW inks mentioned above, the ink sets may contain additional differently colored inks, as well as different strength versions of the CMYKW and other inks.

For example, the ink sets of the present invention can comprise full-strength versions of one or more of the inks in the ink set, as well as "light" versions thereof.

Additional colors for the inkjet ink set include, for example, orange, violet, green, red and/or blue.

The preferred ink sets inks are pigmented inks.

## Silanized colloidal silica particles

Silane modifications have been widely used to alter the surface properties of a silica particle and improve its stability in various conditions. In aqueous solutions, the surface of an unmodified silica is covered with silanol (Si-OH) groups, with some of these groups exist in an ionized state (SiO). This results in silica particles being generally negatively charged at alkaline pH and stabilized by electrostatic repulsion. The silanized colloidal silica particle in the present disclosure refers to the reaction products of an epoxy functionalized silane and a colloidal silica particle stabilized by an anionic charge. During the reaction in an aqueous solution, the silane group of the epoxy functionalized silane first hydrolyzes to silanol groups and then undergoes a condensation reaction with the silanol groups on the surface of the silica particle to form covalent siloxane bonds (Si-O-Si), and the epoxy group is hydrolyzed to dihydroxy groups, or diol moieties. As a result of this silianization process, the modified silica particle gains additional steric stabilization from the covalently grafted organic chains having diol moieties. Compared to electrostatic stabilization, steric stabilization is less sensitive to the ionic strength of a solution. The added steric stabilization on the silica surface thus improves the stability of a silica dispersion upon addition of electrolyte(s), and under freezing conditions.

The starting colloidal silica particles for silanization are particles stabilized with anionic charge with alkaline counter cations, e.g., Li+, K+, Na+ and NH4+. Shapes of the particle include, but not limited to, spherical, nodular, bent, elongated or cocoon shaped particles. Average particle size is preferred to range from 3 nm to 100 nm, more preferably from 3 nm to 30 nm, as measured by dynamic light (DL) scattering techniques. Suitable particle size measuring instruments are available from, for example, Malvern Instruments (Malvern, UK). Typically, anionic charged colloidal silica particles are carried in water in dispersion form with weight% ranging from 10% to 40%, preferably at least 15%. Examples of commercially available starting colloidal silica particles include SNOWTEX® series with grades like sodium stabilized ST-XS, ST-30, ST-50 and ammonia stabilized ST-NXS, ST-N, ST-N-40 from Nissan Chemical Group (Tokyo, Japan); Levasil® series such as CT16 PNH, CA414PNM, CT22M, OF50, CB75 LS and FX170 from Nouryon (Amsterdam, Netherlands); Ludox® series such as AS-30, HS-40, TM-50, LS, SM from WR Grace (Columbia, MD).

Epoxy functionalized silanes include, but are not limited to, 5,6-epoxyhexyltrieth-oxysilane, 2-(3,4-epoxycyclohexyl)ethyltrimethoxsilane, and glycidoxysilanes. Preferably, the epoxysilanes are glycidoxysilanes. Exemplary glycidoxysilane compounds are (3-glycidoxypropyl) triethoxysilane, (3-glycidoxypropyl) trimethoxysilane, γ-glycidoxy-propylmethyl diethoxysilane, γ-glycidoxypropyl trimethoxysilane and (3-glycidoxypropyl) hexyltrimethoxysilane.

Silanized colloidal silica particles of the present invention can be made, preferably, by first preparing a 30-60 % pre-hydrolyzed aqueous epoxy silane solution by mixing desirable amounts of epoxy functionalized silane and deionized water for about 0.5-2 hours. Subsequently, silane surface modification is performed by slowly adding the 30-60% pre-hydrolyzed aqueous epoxy silane solution into dispersion of anionic charged colloidal silica particles over a period

of about 1-10 minutes, and continuously mixing for at least 1 hour at room temperature to complete the reaction. Similar processes were previously described by P. Greenwood in Pigment & Resin Technology, 40/5 (2011) 275-284, and disclosed in U.S. Patent No. 7544726. Examples of commercially available silanized colloidal silica particles with average particle size (PS) less than 30 nm include, but not limited to, Levasil® CC301(average PS= 7nm), CC151(average PS=5 nm),

CC401(average PS=12 nm), and CB301(average PS= 7 nm) from Nouryon (Amsterdam, Netherlands).

The properties and performances of surface modified particles depend on the number of grafted chains per surface area characterized by degree of silianization. Degree of silanization equals to the molar percentage of grafted chains over starting silanol groups at the silica particle surfaces. Higher degree of silanization results in higher degree of steric stabilization with better stability upon electrolyte addition. Shape, surface area and size of the silica particles are believed to remain the same before and after silanization. Degree of silanization can be calculated using the following equation:

$$\text{Degree of silanization (\%)} = (We/Me \times NA)/(SSA \times Ws \times 10^{18} \times 4.6)$$

We: epoxy silane weight
Me: epoxy silane molecular weight
Ws: silica particle weight (g)
SSA: silica particle specific area ($m^2/g$)
NA: Avogadro's number, $6.022 \times 10^{23}$ $mol^{-1}$

where constant 4.6 is average silanol groups per $nm^2$ silica particle surface measured by Zhuralex in Colloids and Surfaces A, Physicochemical and Engineering Aspects, Volume 74, Issue 1, 6 July 1993, Pages 71-90. SSA can be obtained by BET surface area measurement or Sears titration (determination of specific surface area of colloidal silica by titration with sodium hydroxide, G. W. Sears, Anal. Chem. 1956, 28, 12, 1981-1983.). Both processes are well known in the art.

Degree of silanization typically ranges from 8 % to 60 %, preferably from 12 % to 50 %. When degree of silanization is too low, it may not provide sufficient steric stabilization for long term ink stability, while high degree of silanization may not have enough silanol groups left on the silica particle surface to prevent corrosion of the printhead.

Typically, the ink may contain silanized silica particles up to approximately 8%, preferably from about 0.1 to about 5%, and more preferably from about 0. 1 to about 3%, by weight, based on the total weight of the ink.

Pigments

The colorant used for printing the colored image may be a dye or a pigment. Dyes include disperse dyes, reactive dyes, acid dyes and the like. The term "pigment" as used herein means an insoluble colorant that requires to be dispersed with a dispersant and processed under dispersive conditions in the presence of a dispersant. Pigmented inks are preferred.

Pigments suitable for being used are those generally well-known in the art for aqueous inkjet inks. The selected pigment(s) may be used in dry or wet form. For example, pigments are usually manufactured in aqueous media, and the resulting pigments are obtained as a water-wet presscake. In presscake form, the pigment does not agglomerate to the extent it would in dry form. Thus, pigments in water-wet presscake form do not require as much mixing energy to de-agglomerate in the premix process as pigments in dry form. Representative commercial dry pigments are listed in U.S. Patent No. 5085698.

Some examples of pigments with coloristic properties useful in inkjet inks include, but not limited to: cyan pigments from Pigment Blue 15:3 and Pigment Blue 15:4; magenta pigments from Pigment Red 122 and Pigment Red 202; yellow pigments from Pigment Yellow 14, Pigment Yellow 74, Pigment Yellow 95, Pigment Yellow 110, Pigment Yellow 114, Pigment Yellow 128 and Pigment Yellow 155; red pigments from Pigment Orange 5, Pigment Orange 34, Pigment Orange 43, Pigment Orange 62, Pigment Red 17, Pigment Red 49:2, Pigment Red 112, Pigment Red 149, Pigment Red 177, Pigment Red 178, Pigment Red 188, Pigment Red 254, Pigment Red 184, Pigment Red 264 and Pigment Red PV19; green pigments from Pigment Green 1, Pigment Green 2, Pigment Green 7 and Pigment Green 36; blue pigments from Pigment Blue 60, Pigment Violet 3, Pigment Violet 19, Pigment Violet 23, Pigment Violet 32, Pigment Violet 36 and Pigment Violet 38; and black pigment carbon black. The pigment names and abbreviations used herein are the "C.I." designation for pigments established by Society of Dyers and Colourists, Bradford, Yorkshire, UK and published in The Color Index, Third Edition, 1971.

Examples of white color materials include, but are not limited to, white inorganic pigments such as Titanium Oxide, Zinc Oxide, zinc sulfide, antimony oxide, and zirconium oxide. Besides such white inorganic pigments, white

organic pigments such as white hollow resin particles and polymeric particles can also be used. The preferred pigment for the aqueous pigmented white ink is titanium dioxide. Titanium dioxide ($TiO_2$) pigment useful may be in the rutile or anatase crystalline form. It is commonly made by either a chloride process or a sulfate process. In the chloride process, $TiCl_4$ is oxidized to $TiO_2$ particles. In the sulfate process, sulfuric acid and ore containing titanium are dissolved, and the resulting solution goes through a series of steps to yield $TiO_2$. Both the sulfate and chloride processes are described in greater detail in "The Pigment Handbook", Vol. 1, 2nd Ed., John Wiley & Sons, NY (1988), the relevant disclosure of which is incorporated by reference herein for all purposes as if fully set forth.

The titanium dioxide particles can have a wide variety of average particle sizes of about 1 micron or less, depending on the desired end use application of the ink. For applications demanding high hiding or decorative printing applications, the titanium dioxide particles preferably have an average size of less than about 1 micron (1000 nanometers). Preferably, the particles have an average size of from about 50 to about 950 nanometers, more preferably from about 75 to about 750 nanometers, and still more preferably from about 100 to about 500 nanometers. These titanium dioxide particles are commonly called pigmentary $TiO_2$.

For applications demanding white color with some degree of transparency, the pigment preference is "nano" titanium dioxide. "Nano" titanium dioxide particles typically have an average size ranging from about 10 to about 200 nanometers, preferably from about 20 to about 150 nanometers, and more preferably from about 35 to about 75 nanometers. An ink comprising nano titanium dioxide can provide improved chroma and transparency, while still retaining good resistance to light fade and appropriate hue angle. A commercially available example of an uncoated nano grade of titanium oxide is P-25, available from Degussa (Parsippany N.J.).

The titanium dioxide pigment may also bear one or more metal oxide surface coatings. These coatings may be applied using techniques known by those skilled in the art. Examples of metal oxide coatings include silica, alumina, alumina-silica, boria and zirconia, among others. Such coatings may optionally be present in an amount of from about 0.1 wt % to about 10 wt %, and preferably from about 0.5 wt % to about 3 wt %, based on the total weight of the titanium dioxide pigment. These coatings can provide improved properties including reducing the photoreactivity of the titanium dioxide. Commercial examples of such coated titanium dioxides include R700 (alumina-coated, available from Chemours, Wilmington Del.), RDI-S (alumina-coated, available from Kemira Industrial Chemicals, Helsinki, Finland), R706 (available from Chemours, Wilmington Del.) and W-6042 (a silica alumina treated nano grade titanium dioxide from Tayco Corporation, Osaka Japan).

## Pigment dispersion

Traditionally, pigments are stabilized by dispersing agents, such as polymeric dispersants or surfactants, to produce a stable dispersion of the pigment in the vehicle. More recently though, so-called "self-dispersible" or "self-dispersing" pigments (hereafter "SDP") have been developed. As the name would imply, SDPs are dispersible in water without dispersants.

## Self-dispersible pigment dispersion - SDP

The pigment of the present disclosure can be a self-dispersing (or self-dispersible) pigment. The term self-dispersing pigment (or "SDP") refers to pigment particles whose surface has been chemically modified with hydrophilic, dispersability-imparting groups that allow the pigment to be stably dispersed in an aqueous vehicle without a separate dispersant. "Stably dispersed" means that the pigment is finely divided, uniformly distributed and resistant to particle growth and flocculation.

The SDPs may be prepared by grafting a functional group or a molecule containing a functional group onto the surface of the pigment, by physical treatment (such as vacuum plasma), or by chemical treatment (for example, oxidation with ozone, hypochlorous acid or the like). A single type or a plurality of types of hydrophilic functional groups may be bonded to one pigment particle. The hydrophilic groups are carboxylate or sulfonate groups which provide the SDP with a negative charge when dispersed in aqueous vehicle. The carboxylate or sulfonate groups are usually associated with monovalent and/or divalent cationic counter-ions. Methods of making SDPs are well known and can be found, for example, in U.S. Patent Nos. 5554739 and 6852156.

The SDPs may be black, such as those based on carbon black, or may be colored pigments. Examples of pigments with coloristic properties useful in ink-jet inks include: Pigment Blue 15:3 and Pigment Blue 15:4 (for cyan); Pigment Red 122 and Pigment Red 202 (for magenta); Pigment Yellow 14, Pigment Yellow 74, Pigment Yellow 95, Pigment Yellow 110, Pigment Yellow 114, Pigment Yellow 128 and Pigment Yellow 155 (for yellow); Pigment Orange 5, Pigment Orange 34, Pigment Orange 43, Pigment Orange 62, Pigment Red 17, Pigment Red 49:2, Pigment Red 112, Pigment Red 149, Pigment Red 177, Pigment Red 178, Pigment Red 188, Pigment Red 255 and Pigment Red 264 (for red); Pigment Green 1, Pigment Green 2, Pigment Green 7 and Pigment Green 36264 (for green); Pigment Blue 60, Pigment Violet 3, Pigment Violet 19, Pigment Violet 23, Pigment Violet 32, Pigment Violet 36 and Pigment Violet 38 (for

blue); and carbon black. However, some of these pigments may not be suitable for preparation as SDP. Colorants are referred to herein by their "C.I." designations established by Society Dyers and Colourists, Bradford, Yorkshire, UK and published in The Color Index, Third Edition, 1971.

The SDPs of the present disclosure may have a degree of functionalization wherein the density of anionic groups is less than about 3.5 μmoles per square meter of pigment surface (3.5 $\mu mol/m^2$), and more specifically, less than about 3.0 $\mu mol/m^2$. Degrees of functionalization of less than about 1.8 $\mu mol/m^2$, and more specifically, less than about 1.5 $\mu mol/m^2$, are also suitable and may be preferred for certain specific types of SDPs.

Polymer Dispersed Pigment Dispersion

Polymeric Dispersant

The polymeric dispersant for the non-self-dispersing pigment(s) may be a random or a structured polymer. Typically, the acrylic based polymer dispersant is a copolymer of hydrophobic and hydrophilic monomers. Some examples of hydrophobic monomers used are methyl methacrylate, n-butyl methacrylate, 2-ethylhexyl methacrylate, benzyl methacrylate, 2-phenylethyl methacrylate and the corresponding acrylates. Examples of hydrophilic monomers are methacrylic acid, acrylic acid, dimethylaminoethyl(meth)acrylate and salts thereof. Quaternary salts of dimethylaminoethyl(meth)acrylate may also be employed. The "random polymer" means polymers where molecules of each monomer are randomly arranged in the polymer backbone. For a reference on suitable random polymeric dispersants, see: U.S. Patent No. 4,597,794. The "structured polymer" means polymers having a block, branched, graft or star structure. Examples of structured polymers include AB or BAB block copolymers such as the ones disclosed in U.S. Patent No. 5,085,698; ABC block copolymers such as the ones disclosed in EP Patent Specification No. 0556649; and graft polymers such as the ones disclosed in US Patent No. 5,231,131. Other polymeric dispersants that can be used are described, for example, in U.S. Patent No. 6,117,921, U.S. Patent No. 6,262,152, U.S. Patent No. 6,306,994 and U.S. Patent No. 6,433,117.

The "random polymer" also includes polyurethanes. Particularly useful are the polyurethane dispersant disclosed in U.S. Patent Application Publication No. 2012/0214939 where the polyurethane dispersant is crosslinked after dispersing a pigment to form a pigment dispersion, the relevant disclosure of which is incorporated by reference herein for all purposes as if fully set forth.

Another suitable type of polymeric dispersant is Styrene Maleic Anhydride (SMA) copolymer. A "Styrene Maleic Anhydride copolymer" or "SMA copolymer" is a polymer formed of styrene and maleic anhydride monomers, and optionally one or more further comonomers. The copolymers can have a molar ratio of the styrene/maleic anhydride repeating units from 0.2 to 5, preferably from 0.5 to 2. The dispersing agent is generally in the form of a hydrolyzed solution of SMA copolymer. The hydrolyzed solution preferably comprises the SMA copolymer dissolved in an aqueous alkaline solution. An aqueous alkaline solution is useful to hydrolyze the SMA copolymer because the copolymer is not readily soluble in water. The hydroxyl ions of the alkaline solution hydrolyze, or react with, a carbonyl carbon on the anhydride's ring cleaving a carbon-oxygen single bond. The reaction opens the anhydride ring, resulting in the formation of a mono-acid group. The aqueous alkaline solution used to dissolve the SMA copolymer is preferably prepared from ammonium hydroxide, sodium hydroxide, potassium hydroxide or an organic amine. Suitable hydrolyzed SMA copolymer solutions for the present invention include those commercially available from Polyscope Polymers under the trade names XIRAN® SL.

Polymeric Dispersed Color Pigment Dispersion

The color pigment dispersion which are stabilized by added polymer dispersant may be prepared by methods known in the art. It is generally desirable to make the stabilized pigment in a concentrated form. The stabilized pigment is first prepared by premixing the selected pigment(s) and polymeric dispersant(s) in an aqueous carrier medium (such as water and, optionally, a water-miscible solvent), and then dispersing or deflocculating the pigment. The premixing step is generally done in a stirred mixing vessel, and a high-speed disperser (HSD) is particularly suitable for the mixing step. A Cowels type blade attached to the HSD and operated at from 500 rpm to 4000 rpm, and more typically from 2000 rpm to 3500 rpm, provides optimal shear to achieve the desired mixing. Adequate mixing is usually achieved after mixing under the conditions described above for a period of from 15 to 120 minutes. The subsequent dispersing step may be accomplished in a 2-roll mill, media mill, a horizontal mini mill, a ball mill, an attritor, or by passing the mixture through a plurality of nozzles within a liquid jet interaction chamber at a liquid pressure of at least 5,000 psi to produce a uniform dispersion of the pigment particles in the aqueous carrier medium (microfluidizer). Alternatively, the concentrates may be prepared by dry milling the polymeric dispersant and the pigment under pressure. The media for the media mill is chosen from commonly available media, including zirconia, YTZ and nylon. These various dispersion processes are in a general sense well known in the art, as exemplified by U.S. Pat. Nos. 5,022,592, 5,026,427, 5,310,778, 5,891,231, 5,976,232 and US20030089277. The disclosures of each of these publications are incorporated by reference herein for

all purposes as if fully set forth. Preferred are 2-roll mill, media mill, and by passing the mixture through a plurality of nozzles within a liquid jet interaction chamber at a liquid pressure of at least 5,000 psi.

After the milling process is complete the color pigment concentrate may be "let down" into an aqueous system. "Let down" refers to the dilution of the concentrate with mixing or dispersing, the intensity of the mixing/dispersing normally being determined by trial and error using routine methodology, and often being dependent on the combination of the polymeric dispersant, solvent and pigment.

The range of useful particle size after dispersion is typically from about 0.005 micrometers to about 15 micrometers. Typically, the pigment particle size should range from about 0.005 micrometers to about 5 micrometers; and, specifically, from about 0.005 micrometers to about 1 micrometers. The average particle size as measured by dynamic light scattering is less than about 500 nm, typically less than about 300 nm.

Polymeric Dispersed White Pigment Dispersion

One or more dispersants described for colored pigment are also employed to stabilize the titanium dioxide. It is generally desirable to make the stabilized TiO2 pigment in concentrated slurry form. TiO2 slurry is generally done in a stirred mixing vessel, and a high-speed disperser (HSD) is particularly suitable for the mixing step. A Cowels type blade attached to the HSD and operated at from 500 rpm to 4000 rpm, and more typically from 2000 rpm to 3500 rpm, provides optimal shear to achieve the desired mixing. Adequate mixing is usually achieved after mixing under the conditions described above for a period of from 15 to 600 minutes. The amount of titanium dioxide present in the slurry composition is preferably from about 35 wt % to about 80 wt %, based on the total slurry weight, more preferably from about 50 wt % to about 75 wt %, based on the total weight of the slurry. The titanium dioxide has a 50% average particle size (hereinafter referred to as "D50") that is preferably in the range of 50 to 500 nm, more preferably in the range of 150 to 350 nm. The titanium dioxide having a D50 within these ranges enables printed film to exhibit satisfactory opacity of the image, which enables formation of an image with high quality.

In the case of color pigments, the ink may contain up to approximately 30%, preferably about 0.1 to about 25%, and more preferably about 0.25 to about 10%, pigment by weight based on the total ink weight. If an inorganic pigment such as TiO2 pigment is selected, the ink will tend to contain higher weight percentages of pigment than with comparable inks employing color pigment, and may be as high as about 75% in some cases, since inorganic pigments generally have higher specific gravities than organic pigments.

Post Modification of a Polymeric Dispersant after Formation of a Pigment Dispersion

The polymeric dispersant dispersing a pigment may be crosslinked after a pigment dispersion is prepared to form a crosslinked pigment dispersion prior to its inclusion in an inkjet ink. The crosslinkable polymeric dispersant are polymers substituted with crosslinkable moieties selected from the group consisting of acetoacetoxy, acid, amine, epoxy, hydroxyl, blocked isocyanates and mixtures thereof. The crosslinking agent is selected from a group consisting of acetoacetoxy, acid, amine, anhydride, epoxy, hydroxyl, isocyanates, blocked isocyanates and mixtures thereof. In the crosslinking step, a crosslinking agent is added to the pigment dispersion after the pigment is dispersed and crosslinking took place by heating the mixture for several hours at elevated temperature. After the crosslinking step excess polymer can be removed by purification processes such as ultrafiltration. Specific examples of crosslinking moiety/agent pairs are hydroxyl/isocyanate and acid/epoxy.

Ink Polymeric Binder

An ink binder for CMYKW inks is a polymeric compound or a mixture of polymeric compounds that is added to an ink formulation. The binder can impart properties to the printed material that, for example, gives greater durability to the printed material. Typical polymers used as binders in inkjet inks include polyurethane dispersions, acrylics, styrene acrylics, styrene butadienes, styrene butadiene acrylonitriles, neoprenes, ethylene acrylic acids, ethylene vinyl acetate emulsions, latexes and the like. The binder may be stabilized as an emulsion by having ionic substituents such as carboxylic acids, sulfur containing acids, amine groups, and other similar ionic groups. Alternatively, the binder may be stabilized by external surfactants. The binder can be used singly or in combination with other binders. Typically, the binder is a polyurethane and acrylic. The binder is typically present in an ink in an amount of at least 0.2% by weight based on the total weight of the ink. Examples of ink binder polymer include polyurethane polymers such as Takelac® WS5100, Takelac® WS4022, Takelac® W5030, XW-Um601 and XW-Um602A from Mitsui Chemicals (Tokyo, Japan); Acrylic polymers, Joncryl® FLX5000-A, Joncryl® FLX5220 and Joncryl® FLX5026A from BASF (Ludwigshafen, Germany).

Typically, a binder is different from the polymer dispersant described above and is non-reactive to the colorant. The binder is typically added to an ink during the final formulation stage, not during the preparation of a pigment dispersion.

The binder is typically present in an ink in an amount of at least 0.2 % by weight based on the total weight of the ink. The amount can be from 1 to 15 wt%.

Ink Vehicle

The pigmented ink of this disclosure comprises an ink vehicle typically an aqueous ink vehicle, also known as an aqueous carrier medium, and optionally other ingredients.

The ink vehicle is the liquid carrier (or medium) for the aqueous dispersion(s) and optional additives. The term "aqueous ink vehicle" refers to an ink vehicle comprised of water or a mixture of water and one or more organic, water-soluble vehicle components commonly referred to as co-solvents or humectants. Selection of a suitable mixture depends on requirements of the specific application, such as desired surface tension and viscosity, the selected pigment, drying time of the pigmented inkjet ink, and the type of media onto which the ink will be printed.

Examples of water-soluble organic solvents and humectants include: alcohols, ketones, keto-alcohols, ethers and others, such as thiodiglycol, Sulfolane, 2-pyrrolidone, 1,3-dimethyl-2-imidazolidinone and caprolactam; glycols such as ethylene glycol, diethylene glycol, triethylene glycol, tetraethylene glycol, propylene glycol, dipropylene glycol, tripropylene glycol, trimethylene glycol, butylene glycol and hexylene glycol; addition polymers of oxyethylene or oxypropylene such as polyethylene glycol, polypropylene glycol and the like; triols such as glycerol and 1,2,6-hexanetriol; lower alkyl ethers of polyhydric alcohols, such as ethylene glycol monomethyl ether, ethylene glycol monoethyl ether, diethylene glycol monomethyl, diethylene glycol monoethyl ether; lower dialkyl ethers of polyhydric alcohols, such as diethylene glycol dimethyl or diethyl ether; urea and substituted ureas.

A mixture of water and a polyhydric alcohol, such as diethylene glycol, is typical as the aqueous ink vehicle. In the case of a mixture of water and diethylene glycol, the ink vehicle usually contains from 30 % water and 70 % diethylene glycol to 95 % water and 5 % diethylene glycol, more typically from 60 % water and 40 % diethylene glycol to 95 % water and 5 % diethylene glycol. Percentages are based on the total weight of the ink vehicle. A mixture of water and butyl carbitol is also an effective ink vehicle.

The amount of ink vehicle in the ink is typically in the range of from 70 % to 99.8 %, and more typically from 80 % to 99.8 %, by weight based on total weight of the ink.

The ink vehicle can be made to be rapid drying by including solvents such as glycol ethers and 1,2-alkanediols. Glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n- propyl ether, and dipropylene glycol mono-isopropyl ether. Typical 1,2-alkanediols are C4-C6 alkanediols with 1,2-hexanediol being most typical. The amount of glycol ether(s) and 1,2-alkanediol(s) added is typically in the range of from 1 % to 15 %, and more typically from 2 % to 10% by weight, based on the total weight of the ink.

Surfactants are commonly added to inks to adjust surface tension and wetting properties. Suitable surfactants include ethoxylated acetylene diols (e.g. Surfynol® series commercially available from Evonik), ethoxylated alkyl primary alcohols (e.g. Neodol® series commercially available from Shell) and secondary alcohols (e.g. Tergitol® series commercially available from Dow Chemical), sulfosuccinates (e.g. Aerosol® series commercially available from Cytec), organosilicones (e.g. DYNOL™ series commercially available from Evonik) and fluoro surfactants (e.g. CAPSTONE™ series commercially available from Chemours). Surfactants are typically used in amounts up to about 3 % and more typically in amounts up to 1 % by weight, based on the total weight of the ink.

Other ingredients, additives, may be formulated into the inkjet ink, to the extent that such other ingredients do not interfere with the stability and j ettability of the inkjet ink. This may be readily determined by routine experimentation by one skilled in the art.

Inclusion of sequestering (or chelating) agents such as ethylenediaminetetraacetic acid, iminodiacetic acid, ethylenediamine-di(o-hydroxyphenylacetic acid), nitrilotriacetic acid, dihydroxyethylglycine, trans-1,2- cyclohexanediaminetetraacetic acid, diethylenetriamine-N,N,N',N",N"-pentaacetic acid, and glycoletherdiamine-N,N,N',N'-tetraacetic acid, and salts thereof, may be advantageous, for example, to eliminate deleterious effects of heavy metal impurities.

Biocides may be used to inhibit growth of microorganisms.

Ink Properties

Jet velocity, separation length of the droplets, drop size and stream stability are greatly affected by the surface tension and the viscosity of the ink. Pigmented ink jet inks typically have a surface tension in the range of about 20 dyne/cm to about 45 dyne/cm at 25 °C. Viscosity can be as high as 30 cP at 25 °C, but is typically much lower, more typically less than 10 cP at 25 °C. The ink has physical properties compatible with a wide range of ejecting conditions,

i.e., driving frequency of the piezo element or ejection conditions for a thermal head for either a drop-on-demand device or a continuous device, and the shape and size of the nozzle. The inks should have excellent storage stability for long periods so as not to clog to a significant extent in an inkjet apparatus. Furthermore, the ink should not corrode parts of the ink jet printing device it comes in contact with, and it should be essentially odorless and non-toxic. Preferred pH for the ink is in the range of from about 6.5 to about 8.5.

## EXAMPLES

The invention is further illustrated by, but not limited to, the following examples, in which parts and percentages are by weight unless otherwise noted.

### Ingredients and Abbreviations

DMPA = dimethylol propionic acid
EDA = ethylene diamine
IPDI = isophoronediisocyanate
TEA = triethylamine
DETA = diethylenetriamine
MEK = methyl ethyl ketone
TMP = Trimethylolpropane
DMEA = dimethyl ethanolamine
CHDM = 1, 4-cyclohexanedimethanol
DBTL = dibutyltin dilaurate
GLYEO = (3-glycidoxypropyl) triethoxysilane

Unless otherwise noted, the above chemicals were obtained from Aldrich (Milwaukee, WI) or other similar suppliers of laboratory chemicals.

Terathane® T650 - polyether polyol from Invista (Wilmington, DE)
Surfynol®440 and 420 - nonionic surfactant from Evonik (Essen, Germany
Dynol ™ 980 - silicone surfactant from Evonik (Essen, Germany)
NIPex® 160 IQ- carbon black pigment from Orion Engineered Carbons (Kingwood, TX)
SNOWTEX® ST-XS - anionic charged, sodium hydroxide neutralized nano-silica dispersion with average PS from 4 -6 nm, from Nissan Chemical America (Houston TX)
Levasil® CC151 (PS=5 nm), CC301(PS=12 nm) - epoxy silane modified nano-silica dispersion from Nouryon (Amsterdam, Netherlands)

### Preparation of Epoxy Silane Modified Silica Particle

Epoxy silane modification of silica particle was conducted in a 2-step process. GLYEO was used as the epoxy silane, SNOWTEX® ST-XS was the starting silica particle delivered as a 20 % aqueous dispersion neutralized with sodium hydroxide with average particle size from 4-6 nm. 50% Pre-hydrolyzed aqueous GLYEO solution was first prepared by mixing equal amount of GLYEO and DI water for 1hr. Silane surface modification was subsequently done by slowly adding the 50 % pre-hydrolyzed aqueous GLYEO solution into the ST-XS particle dispersion over a period of 5 minutes. To ensure complete reaction of silane and silica particle, the mixture was further aged in an oven set at 60 °C for additional 12 hours. Three modified silica dispersions with different degrees of silanization were prepared as shown in Table 1 below. The degree of silianization was estimated by assuming that the silica particles in SNOWTEX® ST-XS are spherical in shape, have a 5 nm diameter with 545 $g/m^2$ SSA, and possessing 4.6 silanol groups per square nm surface area.

Table 1

| Modified Particle | ST-XS Weight (g) | GLYEO (g) | Degree of Silanization | Starting pH | Ending pH |
|---|---|---|---|---|---|
| SA | 50 | 1.8 | 15% | 10.2 | 10.6 |
| SB | 50 | 3.6 | 30% | 10.2 | 10.8 |

(continued)

| Modified Particle | ST-XS Weight (g) | GLYEO (g) | Degree of Silanization | Starting pH | Ending pH |
|---|---|---|---|---|---|
| SC | 50 | 5.4 | 45% | 10 | 10.8 |

Preparation of Black Pigment Dispersion - K Dispersion

A black dispersion was prepared according to procedure disclosed in U.S. Patent Application Publication No. 2012/0214939, the disclosure of which is incorporated by reference herewith for all purposes as if fully set forth. A carbon black pigment, NIPex 160 was employed, and the dispersant was crosslinked after dispersing the pigment.

Preparation of Ink Binder - PU Binder

To a dry, alkali- and acid-free flask, equipped with an addition funnel, a condenser, stirrer and a nitrogen gas line was added 15.8 g CHDM, 104.7 g Terathane T650, 4.0 g TMP, and 118 g acetone. The contents were heated to 40 °C and thoroughly mixed. 120 g IPDI was then added to the flask via the addition funnel at 40 °C over 5 min, with any residual IPDI being rinsed from the addition funnel into the flask with 2 g acetone.

The flask temperature was raised to 50 °C, held for 240 minutes followed by addition of 15.8 g DMPA, and then 11 g TEA, which was then rinsed with 2 g acetone. The flask temperature was then raised again to 50 °C and held at 50 °C until NCO% was 2.0 % or less.

With the temperature at 50 °C, 570 g deionized (DI) water was added over 10 minutes, followed by 38 g EDA aqueous solution (as a 10% solution in water) over 5 minutes, via the addition funnel. The mixture was held at 50 °C for 1 hr, then cooled to room temperature.

Acetone (-122.0 g) was removed under vacuum, leaving a final dispersion of polyurethane with about 30.0 % solids by weight.

Ink Formulation

Inks used in the examples were made according to standard procedures in the inkjet art. Ingredient amounts were in weight percent of the final ink. Polymer binder and additive were quoted on a solid basis. Pigment dispersion was quoted on pigment basis. As an example of ink preparation, the ink vehicle was prepared and added with stirring to the aqueous ink binder. After stirring until a homogeneous mixture was obtained, the solution was added to the pigment dispersion and mixed until homogeneous again. The final step was to add a silica dispersion or silanized silica dispersion to the above mixture, and mixed until homogeneous. The composition of all inks before silica or modified silica dispersion addition was kept constant as shown in Table 2.

Table 2

| | |
|---|---|
| K dispersion | 6.5% |
| PU Binder | 3% |
| 1,3 Propanediol | 12% |
| Ethylene Glycol | 12% |
| Dynol 980 | 1% |
| Deionized water | Balanced to 100% |

Printhead Compatibility Evaluation and Ink Stability Evaluation

Printheads constructed with Si-MEMs technology are particular vulnerable to aqueous inkjet inks. To evaluate compatibility between a printhead and an ink, the ink's corrosion effect on a printhead coupon's non-wet coating was tested after the printhead coupon was submerged in the ink at 45 °C for an extended length of time. A Samba® G3L printhead coupon having Silicon MEMs with non-wet coating, with a size of 2 cm × 4 cm, was supplied by FUJI FILM Diamatix Inc. (Santa Clara, CA). During testing, the printhead coupon was submerged in 40 ml ink in a sealed plastic container and stored at 45 °C. The printhead coupon had a non-wet hydrophobic coating on one side. The non-wet coating side's water contact angle was measured before ink immersion, and then every two weeks with a total of 8 weeks. Testing was terminated when water contact angle became lower than 90 °C indicating that the non-wet coating

was badly damaged. Each time the printhead coupon was removed from the ink bath for contact angel measurement, it was rinsed with isopropyl alcohol and blot dried with lint free wipes. If water contact angle was below 90 °C, corrosion of the ink to printhead's non-wet coating was not acceptable, and the ink was deemed not compatible with the Si-MEMs printhead.

An ink's long term storage stability was evaluated with an accelerated aging study by measuring the ink's physical properties after storing at 70 °C for 2 weeks. If the changes in viscosity and particle size after aging were higher than 20 %, the ink was deemed unstable for storage longer than 6 to 12 months at room temperature.

Printhead compatibility results are shown in Table 3 below. Inventive Inks 1, 2 and 3 comprised the same ink composition as defined in Table 2 plus 0.2% of silanized silica particles SA, SB, and SC respectively. Inventive Ink 4 comprised 0.5% of Levasil CC301, an epoxy silane modified nano-silica dispersion from Nouryon (Amsterdam, Netherlands) with average particle size around 12 nm. Comp. Ink 1 comprised the ink composition as defined in Table 2 without any additive. Comp. Ink 2 comprised 0.2% of SNOWTEX® ST-XS, an anionic charged and sodium hydroxide neutralized nano-silica particles with average PS from 4-6 nm, from Nissan Chemical America (Houston TX). As shown in Table 3 below, after printhead coupon was submerged in Comp. Ink 1 without any additive, its water contact angle decreased to 78 °C after only 2 weeks. The inventive Inks 1, 2, 3, and 4 contained silanized silica particles. Inks 1, 2, and 4 showed much improved printhead compatibility and didn't etch the printhead coupons after the 8-week immersion test. Inventive Ink 3 showed acceptable printhead compatibility, by preventing corrosion of the non-wet coating. Although Comp. Ink 2 with Snowtex particle passed the printhead compatibility testing, it failed ink stability as shown in table 4 while Inventive Ink 4 passed ink stability testing. In addition, Inks 5 and 6 with higher loading, 1% and 2% of Levasil CC301, passed ink stability testing.

Table 3

| Ink | Additive | Initial | 2-wk | 4-wk | 6-wk | 8-wk |
|---|---|---|---|---|---|---|
| Ink 1 | 0.2% SA | 107° | 106.8° | 106.5° | 102.4° | 98.4° |
| Ink 2 | 0.2% SB | 107° | 101.7° | 101.7° | 97.4° | 95.6° |
| Ink 3 | 0.2% SC | 107° | 95.1° | 93.6° | 71.8° | NA |
| Ink 4 | 0.5% Levasil CC301 | 107° | 108° | 106° | 103° | 104° |
| Comp. Ink 2 | 0.5% SnowTex ST-XS | 107° | 103° | 103° | 105° | 101° |
| Comp. Ink 1 | As defined in Table 2 | 107° | 78.1 | NA | NA | NA |

Table 4

| Ink Number | Additive | Initial viscosity (cps) | Viscosity after 70C 2-week storage (cps) | Viscosity change | Initial D50 PS (nm) | D50 PS after 70C 2-week storage (nm) | D50 PS change |
|---|---|---|---|---|---|---|---|
| Comp. Ink 2 | 0.5% SnowTex ST-XS | 4.62 | 72 | 5600% | 127 | NA | NA |
| Ink 4 | 0.5% Levasil CC301 | 4.62 | 4.28 | -7% | 136 | 130 | -4% |
| Ink 5 | 1.0% Levasil CC301 | 4.75 | 4.35 | -8% | 132 | 131 | -1% |
| Ink 6 | 2.0% Levasil CC301 | 4.95 | 4.55 | -8% | 132 | 131 | -1% |

## Claims

1. An aqueous inkjet ink comprising an aqueous vehicle, a pigment dispersion, a polymeric binder, and an additive;

wherein said pigment dispersion comprises a self-dispersing pigment or a pigment dispersed by a polyurethane dispersant polymer or an acrylic dispersant polymer with alkaline neutralized carboxyl functional group, said polymeric binder is a polyurethane polymer or an acrylic polymer, and said additive comprises a surface modified silanized colloidal silica particle, and is present at less than 3 wt%, based on the total weight of the ink; and wherein the average particle size of said silica particle is smaller than 30 nm.

**2.** The ink of claim 1, wherein said surface modified silanized colloidal silica particle is the reaction product of a colloidal silica particle with an epoxy silane.

**3.** The ink of claim 1 or claim 2, wherein said pigment dispersion comprises a pigment dispersed by a polyurethane dispersant polymer with alkaline neutralized carboxyl functional group.

**4.** The ink of claim 1 or claim 2, wherein said pigment dispersion comprises a pigment dispersed by an acrylic dispersant polymer with alkaline neutralized carboxyl functional group.

**5.** The ink of claim 1 or claim 2, wherein said pigment dispersion comprises a self-dispersing pigment.

**6.** The ink of any one of the preceding claims, wherein said polymeric binder is a polyurethane polymer.

**7.** The ink of any one of claims 1-5, wherein said polymeric binder is an acrylic polymer.

**8.** The ink of any one of the preceding claims, wherein said ink does not comprise any free, surface un-modified, colloidal silica particles.

**9.** The ink of any one of the preceding claims, wherein said polyurethane dispersant polymer and acrylic dispersant polymer are different from said polymeric binder.

**10.** The ink of any one of the preceding claims, wherein said silanized colloidal silica particle has the structure of Formula (I):

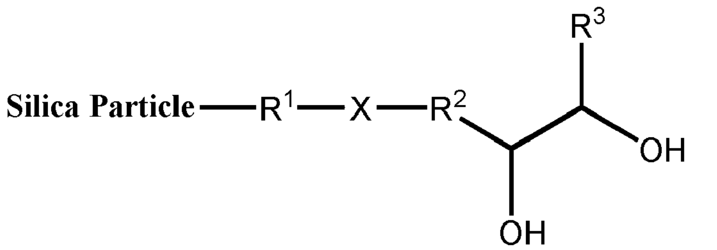

(I) ;

wherein X is O or a straight bond; $R^1$ and $R^2$ are independently linear or branched $C_1$-$C_5$ alkylene; and $R^3$ is H, $C_1$-$C_5$ alkyl or $C_1$-$C_5$ alkyl substituted by $C_1$-$C_3$ alkyl.

**11.** The ink of claim 10, wherein X is O.

**12.** The ink of claim 10, wherein X is a straight bond.

**13.** The ink of any one of claims 10-12, wherein $R^1$ is $-(CH_2)_3-$.

**14.** The ink of any one of claims 10-13, wherein $R^2$ is $-(CH_2)-$, and $R^3$ is H.

Europäisches Patentamt
European Patent Office
Office européen des brevets

# EUROPEAN SEARCH REPORT

Application Number
EP 23 19 9519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/176228 A1 (SAKATA INX CORP [JP]) 25 August 2022 (2022-08-25)<br>* claims; examples 21-24 *<br>----- | 1-14 | INV.<br>C09D11/30<br>C09D11/322<br>C09D11/326 |
| A | US 2010/302292 A1 (DOCKERY KEVIN P [US] ET AL) 2 December 2010 (2010-12-02)<br>* the whole document *<br>----- | 1-14 | |

TECHNICAL FIELDS SEARCHED (IPC)

C09D

The present search report has been drawn up for all claims

1

| Place of search | Date of completion of the search | Examiner |
|---|---|---|
| Munich | 26 January 2024 | Zeslawski, Wojciech |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 9519

This annex lists the patent family members relating to the patent documents cited in the above-mentioned European search report. The members are as contained in the European Patent Office EDP file on
The European Patent Office is in no way liable for these particulars which are merely given for the purpose of information.

26-01-2024

| Patent document cited in search report | Publication date | Patent family member(s) | Publication date |
|---|---|---|---|
| WO 2022176228 A1 | 25-08-2022 | CA 3199007 A1 | 25-08-2022 |
| | | CN 116745134 A | 12-09-2023 |
| | | EP 4230418 A1 | 23-08-2023 |
| | | JP 6952208 B1 | 20-10-2021 |
| | | JP 2022055286 A | 07-04-2022 |
| | | US 2024010861 A1 | 11-01-2024 |
| | | WO 2022176228 A1 | 25-08-2022 |
| US 2010302292 A1 | 02-12-2010 | CN 102449080 A | 09-05-2012 |
| | | EP 2435521 A1 | 04-04-2012 |
| | | JP 2012528026 A | 12-11-2012 |
| | | US 2010302292 A1 | 02-12-2010 |
| | | WO 2010138191 A1 | 02-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7370952 B
- US 8465142 B
- WO 2010138191 A
- US 5925178 A
- US 7544726 B
- US 5085698 A
- US 5554739 A
- US 6852156 B
- US 4597794 A
- EP 0556649 A
- US 5231131 A
- US 6117921 A
- US 6262152 B
- US 6306994 B
- US 6433117 B
- US 20120214939
- US 5022592 A
- US 5026427 A
- US 5310778 A
- US 5891231 A
- US 5976232 A
- US 20030089277 A


### Non-patent literature cited in the description


- **P. GREENWOOD.** *Pigment & Resin Technology,* 2011, vol. 40/5, 275-284
- **ZHURALEX.** Colloids and Surfaces A. *Physicochemical and Engineering Aspects,* 06 July 1993, vol. 74 (1), 71-90
- **G. W. SEARS.** *Anal. Chem.,* 1956, vol. 28 (12), 1981-1983
- The Color Index. 1971
- The Pigment Handbook. John Wiley & Sons, 1988, vol. 1